# EUROPEAN PATENT SPECIFICATION

(11) **EP 1 483 935 B1**
(45) Date of publication and mention of the grant of the patent: **02.05.2007**
(21) Application number: 03743966.8
(22) Date of filing: 12.03.2003
(51) Int. Cl.: H04Q 7/38

(54) **ACTIVATING AN IDENTITY MODULE FOR A COMMUNICATION SYSTEM**
AKTIVIEREN EINES IDENTITÄTSMODULS FÜR EIN KOMMUNIKATIONSSYSTEM
ACTIVATION DE MODULE D'IDENTITE POUR SYSTEME DE COMMUNICATION

(30) Priority: 12.03.2002 CN 02104156
(43) Date of publication of application: 08.12.2004
(73) Proprietor: Axalto SA, 92120 Montrouge (FR); Schlumberger Malco, Inc., Owings Mills, MD 21117 (US)
(72) Inventor: CHOI, Simon, 822126 Singapore (CN)
(74) Representative: Cassagne, Philippe M.J.
(86) International application number: PCT/IB2003/001077
(87) International publication number: WO 2003/077585

(56) References cited:
- EP-A- 0 562 890
- WO-A-01/76309
- DE-C- 19 733 662
- US-A- 5 603 084

## Description

### FIELD OF THE INVENTION

The invention relates, inter alia, to a method of activating an identity module for a communication system. The identity module may be, for example, a subscriber identity module (SIM) card for a mobile communication network, such as, for example, a GSM network.

### BACKGROUND OF THE INVENTION

In existing SIM card allocation mechanisms, a telephone number (e.g. a Mobile Station ISDN (MSISDN) number , 1390XXXXXXX) is associated with an international mobile station subscriber identifier (IMSI). The telephone number and the IMSI code are stored in a SIM card, before the SIM card is delivered together with a mobile phone to a subscriber. The IMSI code may be correlated to a certain geographical zone and a home location register (HLR) belonging to a commercial agent in that zone. This correlation can cause certain inconveniences. For example, it may happen that SIM cards for a certain zone run out of stock, whereas there may still be sufficient SIM cards available for another zone. However, the latter SIM cards cannot be used in the zone where SIM cards have run out of stock because of the IMSI code, which is not correct. The commercial agent for the zone where SIM cards have run out of stock has therefore no option other than order new SIM cards SIM cards for his zone and waiting for the delivery thereof. Meanwhile, he is out of stock. Typically, a commercial agent will try to avoid this. It forces the commercial agent to have a stock of relatively appreciable size, which requires a fairly large amount of capital. Large inventories and non-smooth capital velocity are the negative consequences. Moreover, there is, in effect, a waste of IMSI code resources due to under-utilized SIM card in other regions.

US 5603 084 and WO 01/76309 propose to replace an initial identity code by an effective identity code. However those documents do not allow to soften the existing heavy processes which are relied upon to initially assign a MSISDN to an identity module.

### SUMMARY OF THE INVENTION

It is an object of the invention to activate identity modules in a manner that allows better economy.
To that end, the invention provides a method of activating an identity module as defined in the appended claims. For example, in GSM network systems, the invention allows over-the-air and SIM card activation. When a subscriber buys a new SIM card, he or she can download the IMSI code over-the-air by using the method in accordance of the invention where after the subscriber can use the SIM card smoothly. Such an over-the-air SIM card activation in accordance with the invention removes restrictions on HLR zone distribution on available SIM card IMSI codes, which restrictions are inherent to the existing technology. Consequently, the invention allows commercial agents or resellers to reduce their inventory, to increase their capital velocity, and to improve the utilization of IMSI code. It also allows subscribers to purchase SIM cards in a more conveniently and easy fashion.
These and other aspects of the invention will be described in greater detail hereinafter with reference to drawings.

### BRIEF DESCRIPTION OF THE DRAWINGS

Figure1 illustrates the wireless network system to enable over-the-air SIM card;
Figure 2 illustrates the structure blocks of SIM card;
Figure 3 illustrates the further composition of OTA server to enable over-the-air SIM card activation;
Figure 4 illustrates the method to enable over-the-air SIM card activation by calling on the perspective of commercial agent;
Figure 5 illustrates the method to enable over-the-air SIM card activation by sending short message on the perspective of commercial agent;
Figure 6 illustrates the method to enable over-the-air SIM card activation by calling in case of reseller participation;
Figure 7 illustrates the method to enable over-the-air SIM card activation by sending short message in case of reseller participation;

### DETAILED DESCRIPTION

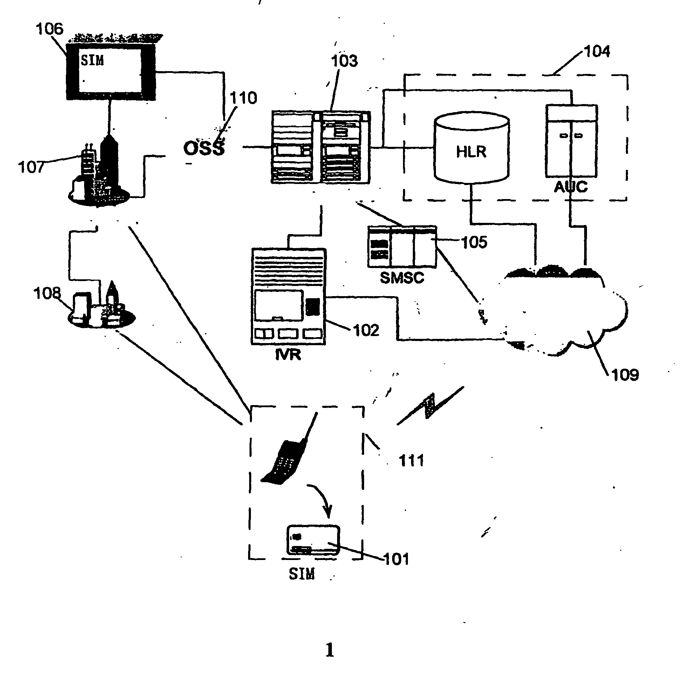

Figure 1 illustrates a wireless network system 100 in accordance with the invention, which allows over-the-air SIM card activation. The wireless network system 100 comprises: a SIM card 101, an Interactive Voice Response (IVR) sub-system 102, an Over-The-Air-announcement(OTA) server 103, a Home Location Register / Authentication Center (HLR/AUC) database 104, an Short Message Service Center (SMSC) element 105, a SIM card customization center 106, a commercial agent 107, a a retailer 108, a wireless network 109, an Operation Support System (OSS) network 110, and a subscriber 111.
The SIM card 101 according to the invention complies the standards issued by the European Telecommunications Standards Institute (ETSI) relating to the Global System for Mobile communications (GSM). In particular, the SIM card compiles with the over-the-air download specifications known as SMS-PP in the GSM standards.
In a SIM card factory, an initial IMSI code and an initial key are assigned to the SIM card. When the subscriber 111 is registered, the initial IMSI code is replaced by an effective IMSI code with a special short message received from SMSC element 105. Likewise, the initial key can be replaced by an effective key.

The IVR sub-system 102 operates like a call center and can automatically respond to a call from the subscriber 111 holding the SIM card 101. The MSISDN number Is extracted from the call, and sent to the OTA server 103 to inform that the subscriber 111 is requesting activation of his SIM card 101.
The OTA server 103 may provide various functions: subscriber management, group management, SIM card data file updating, SIM card profiling management, multi-SIM card vendor support, message tracking, usage report generation, send/receive short message (SMS) and HLR/AUC subscriber data updating. These functions can be accessed through one or more interfaces, such as, for example, a graphic user interface (GUI) and an application program interface (API). The OTA server 103 receives the customized SIM card information to provide interactive wireless communication service to the subscriber 111 and assigns the effective IMSI code to the SIM card 101. The specific components and functions are described in greater detail hereinafter. The OTA server 103 is responsible for all the requests from the commercial agent 107, the IVR sub-system 102 and the SMSC element 105, and for updating the appropriate subscriber record in the HLR/AUC database 104.
The HLR/AUC database 104 can be part of an ordinary HLR or AUC known in GSM to store subscriber data and perform data security authentication. The HLR/AUC database 104 uses a user name and a password to authenticate the subscribers with different rights, and records all the attempts to connect the wireless network 109 via a platform. All the passwords are stored in encrypted format. The security protocol in the invention is compliant with GSM 3.48 standard with L3 security support.
The interface between the OTA server 103 and the HLR/AUC database 104 is a TCP/IP connection. The TCP/IP connection may be, for example, in the form of a X.25 line, or a serial communication port or a direct LAN connection. The connection between the OTA server 103 and the IVR sub-system 102 is a TCP/IP connection defined by the OTA server 103. The interface between the IVR sub-system 104 and the wireless network 109 is used for voice, and supports dial-up transmission.

The OTA server 103 manages the interface between the SIM card 101 and the wireless network 109. This management allows a profiling of the SIM card 101 based on, for example, the following features:

| Wireless Features | Description | SIM File |
|---|---|---|
| ADN-FDN transfer | Capability to transfer the subscriber from automatic directory number (AND) to a fixed directory number (FDN), or vice versa. When the subscriber is transferred to an FDN directory, only the telephone number on the FDN directory is allowed to dial. | EF_AFSWIT CH |
| Send message | Capability to deliver a short text message to the subscriber over-the-air. Basically, it functions as a"pager". | EF_SMS |
| MSISDN management | Capability to add, modify and delete telephone numbers in subscriber's personal telephone number file (typically voice telephone number, fax number, data phone number) | EF_MSISDN |
| Language selection | Capability to add, modify, delete and store a preferred language in a SIM card language list. | EF_LP |
| IMSI code | Capability to modify or delete and store the IMSI code on a SIM card. | EF_IMSI |
| SMS parameters | Capability to modify, delete or store the SMSC address on a SIM card. | EF_SMSP |
| Lock PIN 1 | Capability to lock PIN 1 (=CHV1) | 0000 |
| Lock/unlock PIN2 | Capability to lock or unlock PIN 2 (=CHV2) | 0100 |
| SPN | Capability to update the file that contains a service provider name (SPN) over-the-air. | EF_SPN |

The OTA server 103 is interfaced with the commercial agent 107 through a TCP/IP connection over the OSS network 110. The interface between the OTA server 103 and the SMSC element 105 is an ordinary TCP/IP interface in a short message center based on, for example, a protocol known as SMPP or CMID.
In addition, the wireless network system 100 also provides the following features: the HLR/AUC database 104 can be updated through the OTA server 103; a hotline belonging to the IVR sub-system can be activated; the commercial agent 107 can access the OTA server 103 through the OSS network 110; and applications on the SIM card 101 support over-the-air service.

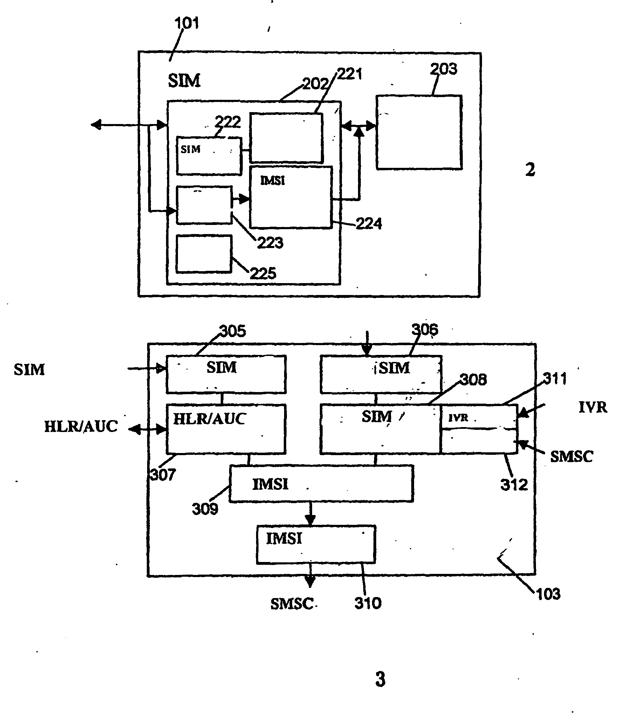

Figure 2 illustrates the SIM card 101. The SIM card 101 comprises a processor 202 and a storage medium 203 in which pre-sales initial information can be stored such as, for example, an initial IMSI code. The processor 202 includes a boot element 221 used to start a SIM card program when the SIM card 101 is initially installed to a mobile terminal and receives a power supply voltage. The boot element 221 causes the processor 202 to receive the MSISDN assigned by the commercial agent 107. A SIM-card messaging element 222 sends the initial IMSI code and the MSISDN number of the SIM card to the OTA server 103 via the mobile terminal. A short message interpretation element 223 processes a special short message from the OTA server 103. The special short message contains the effective IMSI code that the OTA server 103 has assigned to the SIM card. The short message interpretation element 223 extracts the effective IMSI code from the special short message. An IMSI code update element 224 replaces the initial IMSI code stored in the storage medium 203 by the effective IMSI code.
The processor 202 of the SIM card 101 also includes a reboot element 225. The reboot element 225 reboots the mobile terminal after the IMSI code in the SIM card 101 has been updated as described hereinbefore. To that end, the mobile terminal is shut down and, subsequently, restarted to configure mobile terminal with the SIM card 101 contained therein for normal operation. The messaging element 222 of the SIM card 101 includes a fixed directory number (FDN)element (not shown) used to call IVR sub-system 102 via the mobile terminal. The IVR sub-system 102 automatically responds to the call and extracts the MSISDN number of the SIM card 101 and sends the MSISDN number to the OTA server 103.
The messaging element 222 of SIM card 101 includes a short message delivery element (not shown) that sends a short message to the SMSC element 105 via the mobile terminal. The short message contains the initial IMSI code and MSISDN number. The SMSC element 105 delivers the short message to the OTA server 103.
The SIM card 101 may comprise further elements, such as, for example, application programs or other programming code. The SIM card 101 processes the reception and the sending of short message. Furthermore, the SIM card 101 can update one or more profiles contained in the SIM card 101 and handle the interchange of automatic directory numbers (ADN) and fixed directory numbers (FDN).

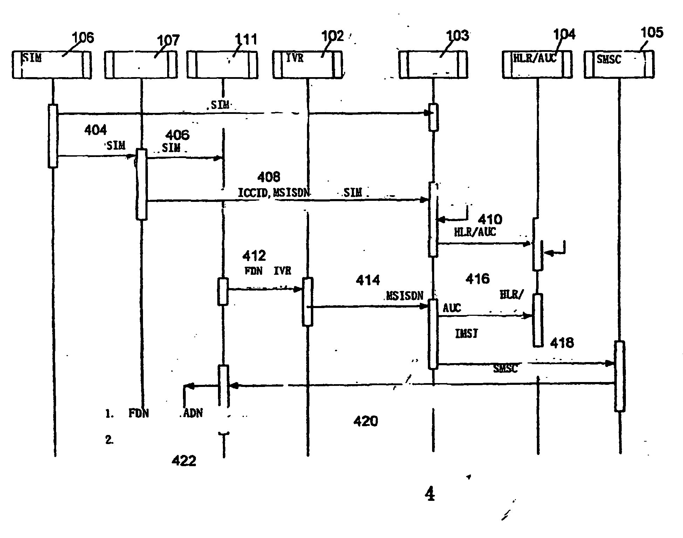

Figure 3 illustrates the OTA server 103. The OTA server 103 comprises a customized SIM card information receiving part 305, which receives initial information of the SIM card 101 from the SIM card customization center 106. The initial information includes the initial IMSI code of the SIM card 101. The OTA server 103 further comprises a commercial agent SIM card information receiving part 306, which receives sold SIM card information from the commercial agent 10. The sold SIM card information comprises the MSISDN number and the initial IMSI code. The OTA server further comprises a HLR/AUC database management part 307, which stores effective SIM card information in the HLR/AUC database 104 and which activates subscriber 111 in the HLR/AUC database 104. The OTA server 103 further comprises a subscriber SIM card information receiving part 308, which receives the SIM card information containing the MSISDN number and initial the IMSI code from the mobile terminal with the sold SIM card 101 inserted therein. The OTA server 103 further comprises an IMSI code allocation part 309, which allocates an effective IMSI code appropriate for the region concerned and which allocates the HLR where the subscriber is located to the subscriber MSISDN number. The effective IMSI code replaces the initial IMSI code initially contained in the SIM card 101. The OTA server 103 further comprises a short message delivery part 310, which sends a special short message containing the effective IMSI code to the subscriber's mobile terminal through the SMSC element105.
The subscriber SIM card information receiving part 308 of OTA server 103 also includes a short message processing part 312 and an IVR processing part 311. The short message processing part 312 receives short messages containing the SIM card information from SMSC element 105, and extract the MSISDN number. The IVR processing part 311 receives MSISDN number of the subscriber from IVR sub-system 102.
The OTA server 103 further comprises a module for remote SIM card management (not shown), hereinafter referred to as GSM file manager (GFM). The GFM can manage the following information: directory data (ADN, FDN, service directory numbers (SDN), language selection, SMSC (short message service center) related information, subscriber numbers MSISDN number and IMSI code) and personal identification numbers (PIN). The OTA server 103 implements the following features:
● Initialization of the SIM card 101 through a GUI;
● SIM program management for example in the form of a private-announcement agreement among several SIM card manufacturers and compatible with the standard GSM 03.48v8 for SIM card management;
● Interfaces to different SIM card resellers;
● GSM 03.48v8 compliant transmission layer security;
● Capability to track the state of a request state with GUI monitoring;
● Short message error management;
● System management and system monitoring capability;
● High availability manager;
● Resilience.

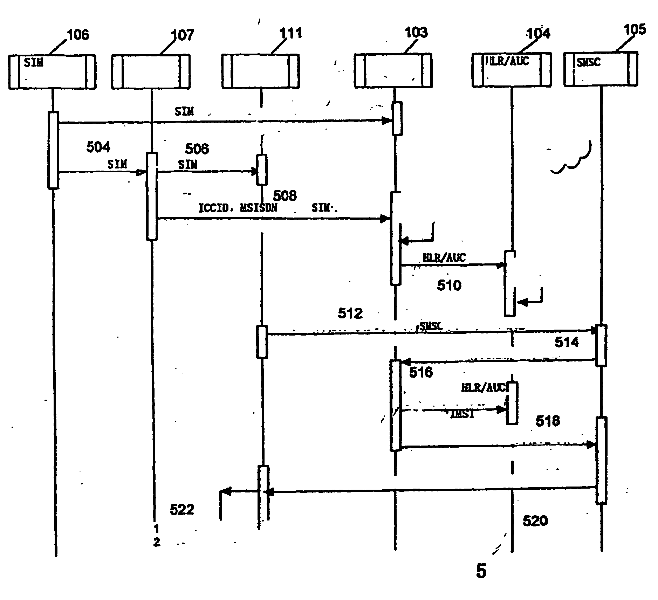

Figure 4 illustrates a method of over-the-air SIM card activation in accordance with the invention. In step 404, the SIM card customization center 106 customizes SIM card 101 and allocates the customized SIM card 101 to the commercial agent 107. Furthermore, the SIM card customization center 106 delivers the initial information of the SIM card 101 to the OTA server 103. The initial information comprises the initial IMSI code temporarily assigned to the SIM card 101 and the integrated circuit card identifier (ICCID) code. In step 406, the commercial agent 107 sells the SIM card 101 to the subscriber 111 and assigns a MSISDN number to the SIM card 101. In step 408, the commercial agent 107 delivers SIM card information to the OTA server 103. This SIM card information comprises the initial IMSI code, the ICCID code and the MSISDN number. The OTA server 103 stores this information in its database.
Next, in step 410, the OTA server 103 is synchronized with the HLR/AUC database 104. That is, the SIM card information contained in the database of the OTA server 103 is copied into the HLR/AUC database 104. In this manner, the OTA server 103 activates the subscriber 111 in the HLR/AUC database 104. In step 412, the subscriber 111 calls the IVR sub-system 102 whose number is contained in the FDN. In step 414, the IVR sub-system 102 automatically responds to this call and, in addition, extracts and delivers the MSISDN number from the call to the OTA server 103. In step 416, the OTA server 103 assigns the effective IMSI code to the subscriber 111, and updates the record of subscriber 111 in HLR/AUC database 104 accordingly. In addition, in step 418, the OTA server 103 sends a special short message to SMSC element 105 in an appropriate defined format. The special short message contains the effective IMSI code of subscriber 111.
Next, in step 420, the SMSC element 105 sends the special short message with the effective IMSI code contained therein to the subscriber 111. In step 422, the subscriber 111 successfully receives the special short message. The IMSI update element 224 contained in the SIM card 101 replaces the initial IMSI code with the effective IMSI code and changes the fixed number directory (FDN) into an automatic number directory (AND). Furthermore, the IMSI update element 114 assigns an effective key Ki to the SIM card 101 and then shuts down the terminal. The system setting is completed when the terminal is switched on again.

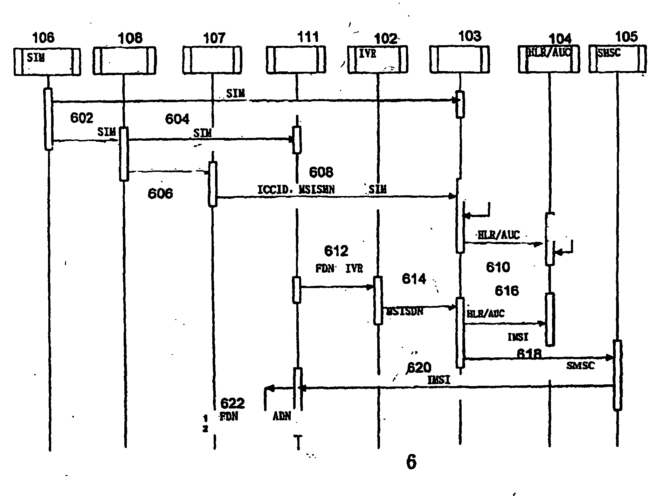

Figure 5 illustrates another method of over-the-air SIM card activation. This method uses short message services. In step 504, the SIM card customization center 106 customizes the SIM card 101 , allocates the customized SIM card 101 to the commercial agent 107, and delivers initial information of the SIM card 101 to the OTA server 103. The initial information comprises the initial IMSI code and the ICCID code temporarily assigned to the SIM card 101. In step 506, the commercial agent 107 sells the SIM card 101 to the subscriber 111 and allocates an MSISDN number to the SIM card 101. In step 508, the commercial agent 107 delivers SIM card information comprising the initial IMSI code, the ICCID code and the MSISDN number to OTA server 103. The OTA server 103 stores this information in its database.
Next, in step 510, the OTA server 103 is synchronized with the HLR/AUC database 104 in a manner similar to that in step 410 described hereinbefore with reference to Figure 4. In step 512, the subscriber 111 switches on the mobile terminal with the SIM card 101 contained therein. By doing so, the subscriber 111 automatically sends a short message to the SMSC element 105 in a pre-defined format. In step 514, the SMSC element 105 forwards this short message to the OTA server 103. In step 416, the OTA server 103 extracts the MSISDN number from the short message and assigns an effective IMSI code to the subscriber 111. Furthermore, the OTA server 103 updates the record of the subscriber 111 in the HLR/AUC database 104. In step 518, the OTA server 103 sends a special short message to the SMCS element 105 in the pre-defined format. The special short message contains the effective IMSI code of the subscriber 111.

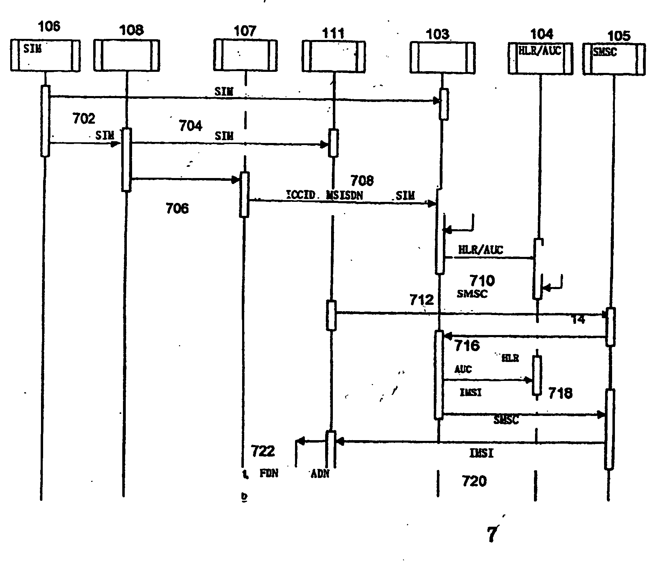

Next, in step 520, the SMSC element 105 sends the special short message with the effective IMSI code to the subscriber 111. In step 522, the subscriber 111 successfully receives the short message. The IMSI update element 224 contained in the SIM card 101 replaces the initial IMSI code by the effective IMSI code and assigns an effective key Ki to the SIM card 101 and then shuts down the mobile terminal. The system setting is completed when the mobile terminal is switched on.
As described hereinbefore, placing a call or sending a short message can activate a new SIM card. There is no need for the reseller 108 to participate in this process. However, the invention also provides processes where the reseller 108 can participate, as described hereinafter with reference to Figure 6 and Figure 7.
Figure 6 illustrates a method of over-the-air SIM card activation in which the reseller 108 participates. The method is based on placing a call. In step 602, the SIM card customization center 106 customizes the SIM card 101, allocates the customized SIM card 101 to the reseller 108, and delivers initial information of the SIM card 101 to the OTA server 103. The initial information comprises an initial IMSI code and the ICCID code temporarily assigned to the SIM card 101. In step 604, the reseller 108 sells the SIM card 101 to the subscriber 111, and allocates an MSISDN number to the SIM card 101. In step 606, the reseller 108 transfers SIM card information to the commercial agent 107. In step 608, the commercial agent 107 delivers the SIM card information to the OTA server 103. The SIM card information comprises the initial IMSI code, the ICCID code and the MSISDN number. The OTA server 103 stores this information in its database.
Next, in step 610, the OTA server 103 is synchronized with the HLR/AUC in a manner similar to that in step 410 described hereinbefore with reference to Figure 4. In step 612, the subscriber 111 calls the IVR sub-system 102 using the FDN. In step 614, the IVR sub-system 102 automatically responds to this call. Furthermore, the IVR sub-system 102 extracts the MSISDN number from the call and delivers the MSISDN number to the OTA server 103. In step 616, OTA server 103 assigns the effective IMSI code to the subscriber 111. In addition, the OTA server 103 updates the record of the subscriber 111 in the HLR/AUC database 104. In step 618, the OTA server 103 sends a special short message to the SMCS element 105 in a pre-defined format. The special short message contains the effective IMSI code of the subscriber 111.
Next, in step 620, the SMSC sub-system 105 sends the special short message with the effective IMSI code to the subscriber 111. In step 622, the subscriber 111 successfully receives the short message. The IMSI update element 224 contained in the SIM card 101 replaces the initial IMSI code by the effective IMSI code and changes the FDN into an ADN. Furthermore, the IMSI update element 224 assigns an effective key Ki to the SIM card 101 and subsequently shuts down the mobile terminal. The system setting is completed when the mobile terminal is switched on again.
Figure 7 illustrates another method of over-the-air SIM card activation in which the reseller 108 participates. The method is based on the use of short message services. In step 702, the SIM card customization center 106 customizes SIM card 101 and allocates the customized SIM card 101 to the reseller 108. The SIM card customization center 106 delivers initial information of the SIM card 101 to the OTA server 103. The initial information comprises an initial IMSI code and an ICCID code temporarily assigned to the SIM card 101. In step 704, the reseller 108 assigns an MSISDN number to the SIM card 101. In step 706, the reseller 108 delivers SIM card information to the OTA server 103. The SIM card information comprises the initial IMSI code, the ICCID code and the MSISDN number. In step 706, the OTA server 103 stores this information in its database.
Next, in step 710, the OTA server 103 is synchronized with the HLR/AUC database 104 in a manner similar to that in step 410 described hereinbefore with reference to Figure 4. In step 712, the subscriber 111 switches on the mobile terminal with the SIM card contained therein, which automatically sends a short message to the SMSC element 105 in pre-defined format. In step 714, the SMSC element 105 forwards the short message to the OTA server 103. In step 716, the OTA server 103 extracts the MSISDN number from the short message, assigns an effective IMSI code to the subscriber 111, and updates the record of subscriber 111 in HLR/AUC database 104. In step 718, the OTA server 103 sends a special short message to the SMSC element 105 in the pre-defined format. The special short message contains the effective IMSI code of the subscriber 111.
Next, in step 720, the SMSC sub-system 105 sends the special short message with new IMSI code to subscriber 111. In step 722, the subscriber 111 successfully receives the short message. The IMSI update element 224 contained in the SIM card 101 replaces the initial IMSI code wit the effective IMSI code. Furthermore, IMSI update element 224 assigns an effective key Ki to the SIM card 101 and, subsequently, switches off the mobile terminal. The system setting is completed when mobile terminal is switched on again,
The difference between the methods illustrated in Figures 4 and 5, on the one hand, and the methods described with reference to Figures 6 and 7, on the other hand, substantially lies in the first two steps. In the methods illustrated in figure 6 and 7, the SIM card customization center 106 assigns the reseller 108 to the SIM card 101 and, subsequently, the reseller 108 sells the SIM card 101 to the subscriber 111 and delivers the corresponding SIM card information to the commercial agent 107.
The description hereinbefore illustrates various over-the-air SIM card activation methods that provide many advantages. It alleviates restrictions of HLR region distribution on available SIM card IMSI codes. Consequently, it allows commercial agents or reseller to reduce their stock of SIM cards, which provides economical advantages in terms of capital velocity. It also allows subscribers to purchase SIM cards in a more convenient and easy fashion.

The description hereinbefore also illustrates the following characteristics. An identity module (SIM 101) is activated in the following manner. A customization center (106) stores an initial identity code (IMSI) in the identity module (101) and communicates the initial identity code to a network management system (103, 104). A distributor (107, 108) assigns a communication address (MSISDN) to the identity module and (101) communicates the communication address together with the initial identity code to the network management system (103, 104). The identity module (101) contacts the network management system (103, 104) via a communication device (mobile phone), whereby the network management system (103, 104) receives the initial identity code together with the communication address. The network management system (103, 104) recognizes the initial identity code together with the communication address and, in response, assigns an effective identity code to the identity module (101). Subsequently, the network management system (103, 104) sends a message to the communication device (mobile phone). This message (a special SMS) comprises the effective identity code. The identity module (101) receives the message via the communication device, extracts the effective identity code from the message and stores the effective identity code for future use.

The drawings and their description hereinbefore illustrate rather than limit the invention. It will be evident that there are numerous alternatives, which fall within the scope of the appended claims. In this respect, the following closing remarks are made.

The invention has been described in detail by way of example with reference to a mobile communication network. However, the characteristics summarized hereinbefore can equally be implemented in numerous other types of networks, such as, for example, a local area network (LAN).

There are numerous ways of implementing functions by means of items of hardware or software, or both. In this respect, the drawings are very diagrammatic, each representing only one possible embodiment of the invention. Thus, although a drawing shows different functions as different blocks, this by no means excludes that a single item of hardware or software carries out several functions. Nor does it exclude that an assembly of items of hardware or software or both carry out a function.

Any reference sign in a claim should not be construed as limiting the claim. The word "comprising" does not exclude the presence of other elements or steps than those listed in a claim. The word "a" or "an" preceding an element or step does not exclude the presence of a plurality of such elements or steps.

## Claims

1. A method of activating an identity module (101), the method comprising:
- an initial activation step in which a customization center stores an a initial identity code in the identity module and communicates the initial identity code to a network management system **(103, 104)** ;
- a distribution step in which a distributor **(107),** who sells the identity module to an end-user, assigns an MSISDN to the identity module **(101)** and communicates the MSISDN to the network management system **(103, 104)**;
- a first activation step in which the identity module receives the assigned MSISDN,
- a second activation step in which the identity module contacts the network management system via a communication device, whereby the network management system receives the initial identity code together with the MSISDN from the identity module ;
- a third activation step in which the network management system **(103,104)** recognizes the initial identity code together with the MSISDN and, in response, assigns an effective identity code to the identity module and, subsequently, sends a message to the communication device, the message comprising the effective identity code ;and
- a fourth activation step in which the identity module **(101)** receives the message via the communication device, extracts the effective identity code from the message and stores the effective identity code for future use.

2. A method of activating an identity module as claimed in claim 1, wherein in the third activation step, the network management system **(103, 104)** further assigns an effective key to the identity module and includes the effective key in the message, and wherein in the fourth activation step the identity module extracts the effective key from the message and stores the effective key for future use.

3. The method as claimed in anyone of the preceding claims, wherein the identity module **(101)** includes a processor which reboots the communication device after the effective identity code is stored for future use.

4. The method as claimed in anyone of the preceding claims, wherein the identity module **(101)** further comprises a fixed directory number for effecting a call to an interactive voice responder via the communication device, the interactive voice responder being part of the network management system and extracting the initial identity code and the MSISDN from the call.

5. The method as claimed in anyone of the preceding claims, wherein the identity module includes a processor which sends a message to a message service center via a mobile terminal hosting the identity module, the message service center being part of the network management system **(103,104),** the message comprising the initial identity code and the MSISDN.

6. The method as claimed in anyone of the preceding claims, wherein the identity module **(101)** comprises a module-identifier code and a processor which delivers the module-identifier code to the network management system in addition to the identity code and the MSISDN.

## Patentansprüche

1. Ein Verfahren zum Aktivieren eines Identitätsmoduls (**101**), wobei das Verfahren folgende Schritte beinhaltet:
- Einen anfänglichen Aktivierungsschritt, in dem ein Kundencenter einen anfänglichen Identitätscode im Identitätsmodul speichert und diesen anfänglichen Identitätscode einem Netzwerkverwaltungssystem (**103, 104**) meldet,
- Einen Verteilungsschritt, in dem ein Großhändler (**107**), der das Identitätsmodul an einen Endverbraucher verkauft, dem Identitätsmodul (**101**) eine MSISDN zuweist und die MSISDN dem Netzwerkverwaltungssystem (**103, 104**) meldet,
- Einen ersten Aktivierungsschritt, in dem das Identitätsmodul die zugewiesene MSISDN erhält,
- Einen zweiten Aktivierungsschritt, in dem das Identitätsmodul über eine Kommunikationseinheit Verbindung mit dem Netzwerkverwaltungssystem aufnimmt, wodurch das Netzwerkverwaltungssystem den anfänglichen Identitätscode sowie die MSISDN des Identitätsmoduls erhält,
- Einen dritten Aktivierungsschritt, in dem das Netzwerkverwaltungssystem (**103, 104**) den anfänglichen Identitätscode sowie die MSISDN erkennt und daraufhin dem Identitätsmodul einen effektiven Identitätscode zuweist und anschließend eine Meldung an die Kommunikationseinheit sendet, die den effektiven Identitätscode enthält,
- Einen vierten Aktivierungsschritt, in dem das Identitätsmodul (**101**) die Meldung über die Kommunikationseinheit empfängt, den effektiven Identitätscode aus der Meldung extrahiert und den effektiven Identitätscode zur zukünftigen Verwendung speichert.

2. Ein Verfahren zum Aktivieren eines Identitätsmoduls wie in Anspruch 1 beansprucht, wobei das Netzwerkverwaltungssystem (**103, 104**) in einem dritten Aktivierungsschritt dem Identitätsmodul einen effektiven Schlüssel zuweist und den effektiven Schlüssel in die Meldung einschließt, und wobei das Identitätsmodul in einem vierten Aktivierungsschritt den effektiven Schlüssel aus der Meldung extrahiert und den effektiven Schlüssel zur zukünftigen Verwendung speichert.

3. Das Verfahren wie in jedem der vorstehenden Ansprüche beansprucht, wobei das Identitätsmodul (**101**) einen Prozessor beinhaltet, der die Kommunikationseinheit neu startet, nachdem der effektive Identitätscode zur zukünftigen Verwendung gespeichert wurde.

4. Das Verfahren wie in jedem der vorstehenden Ansprüche beansprucht, wobei das Identitätsmodul (**101**) eine feststehende Verzeichnisnummer beinhaltet, mit der ein Signal an einen interaktiven Voice Responder, der ein Bestandteil des Netzwerkverwaltungssystems ist, gesendet wird, und mit der der anfängliche Identitätscode und die MSISDN des Signals extrahiert wird.

5. Das Verfahren wie in jedem der vorstehenden Ansprüche beansprucht, wobei das Identitätsmodul einen Prozessor beinhaltet, der eine Meldung über ein mobiles Terminal mit dem Identitätsmodul an ein Message Service Center sendet, wobei das Message Service Center Teil des Netzwerkverwaltungssystems (**103, 104**) ist und die Meldung sowohl den anfänglichen Identitätscode als auch die MSISDN enthält.

6. Das Verfahren wie in jedem der vorstehenden Ansprüche beansprucht, wobei das Indentitätsmodul (**101**) einen Modulidentifikationscode und einen Prozessor enthält, der den Modulidentifikationscode zusätzlich zum Identitätscode und der MSISDN an das Netzwerkverwaltungssystem sendet.

## Revendications

1. Une méthode d'activation d'un module d'identité (**101**), cette méthode comprenant :
- une étape d'activation initiale pendant laquelle un centre de personnalisation stocke un code d'identité initial dans le module d'identité et communique le code d'identité initial à un système de gestion de réseau (**103, 104**) ;
- une étape de distribution pendant laquelle un distributeur (**107**), qui vend le module d'identité à un utilisateur final, attribue un MSISDN au module d'identité (**101**) et communique le MSISDN au système de gestion de réseau (**103,104**) ;
- une première étape d'activation pendant laquelle le module d'identité reçoit le MSISDN attribué,
- une seconde étape d'activation pendant laquelle le module d'identité contacte le système de gestion de réseau via un dispositif de communication, permettant ainsi au système de gestion de réseau de recevoir le code d'identité initial ainsi que le MSISDN de la part du module d'identité ;
- une troisième étape d'activation pendant laquelle le système de gestion de réseau (**103,104**) reconnaît le code d'identité initial ainsi que le MSISDN et, en réponse, attribue un code d'identité effectif au module d'identité puis envoie un message au dispositif de communication, le message comprenant le code d'identité effectif ; et
- une quatrième étape d'activation pendant laquelle le module d'identité (**101**) reçoit le message par le biais du dispositif de communication, extrait le code d'identité effectif hors du message et stocke le code d'identité effectif pour une utilisation ultérieure.

2. Une méthode d'activation d'un module d'identité selon la revendication 1, **caractérisée en ce que**, dans la troisième étape d'activation, le système de gestion de réseau (**103,104**), attribue également une clé effective au module d'identité et inclut cette clé effective dans le message, et **en ce que**, dans la quatrième étape d'activation, le module d'identité extrait la clé effective du message et stocke cette clé effective pour une utilisation ultérieure.

3. La méthode selon chacune des revendications précédentes, **caractérisée en ce que** le module d'identité (**101**) inclut un processeur qui redémarre le dispositif de communication une fois que le code d'identité effectif a été stocké pour une utilisation ultérieure.

4. La méthode selon chacune des revendications précédentes, **caractérisée en ce que** le module d'identité (**101**) comprend également un numéro d'appel déterminé pour effectuer un appel vers un répondeur vocal interactif via le dispositif de communication, le répondeur vocal interactif faisant partie du système de gestion de réseau et extrayant le code d'identité initial ainsi que le MSISDN de l'appel.

5. La méthode selon chacune des revendications précédentes, **caractérisée en ce que** le module d'identité inclut un processeur qui envoie un message vers un centre de services de messagerie par le biais d'un terminal mobile hébergeant le module d'identité, le centre de services de messagerie faisant partie du système de gestion de réseau (**103,104**), et le message comprenant le code d'identité initial ainsi que le MSISDN.

6. La méthode selon chacune des revendications précédentes, **caractérisée en ce que** le module d'identité (**101**) comprend un code d'identifiant module et un processeur qui fournit le code d'identifiant module au système de gestion de réseau, ainsi que le code d'identité et le MSISDN**.**
